# EUROPEAN PATENT APPLICATION

(11) **EP 4 329 412 A1**
(43) Date of publication of application: **28.02.2024**
(21) Application number: 22790893.6
(22) Date of filing: 12.04.2022
(51) Int. Cl.: H04W 72/12

(54) **SCHEDULING ELECTRONIC DEVICE AND MEMBER ELECTRONIC DEVICE FOR WIRELESS COMMUNICATION, AND METHOD**

(30) Priority: 19.04.2021 CN 202110419178
(71) Applicant: Sony Group Corporation, Tokyo 108-0075 (JP)
(72) Inventor: TAO, Xiaofeng, Beijing 100876 (CN); WEN, Yang, Beijing 100876 (CN); WANG, Chengrui, Beijing 100876 (CN); GUO, Yinan, Beijing 100876 (CN); WANG, Xiaoxue, Beijing 100027 (CN); SUN, Chen, Beijing 100027 (CN); HOU, Yanzhao, Beijing 100876 (CN)
(74) Representative: D Young & Co LLP
(86) International application number: PCT/CN2022/086291
(87) International publication number: WO 2022/222784

(57) **Abstract**

The present disclosure provides a scheduling electronic device and a member electronic device for wireless communication, and a method; the scheduling electronic device is used for selecting a candidate time-frequency resource set required for communication of a predetermined electronic device in the group to which the scheduling electronic device belongs; and the scheduling electronic device comprises a processing circuit, and the processing circuit is configured to: receive, from at least one member electronic device located in an overlapping region between said group and other groups, a cooperative sensing result obtained by sensing a time-frequency resource by the at least one member electronic device during at least a portion of a cooperative resource sensing window, so as to assist the scheduling electronic device in selecting a candidate time-frequency resource set, the cooperative resource sensing window being a time period for the at least one member electronic device to perform the assistance so as to sense the time-frequency resource.

## Description

The present application claims priority to Chinese Patent Application No. 202110419178.X, titled "SCHEDULING ELECTRONIC DECIVE AND MEMBER ELECTRONIC DECIVE FOR WIRELESS COMMUNICATION, AND METHOD", filed on April 19, 2021 with the China National Intellectual Property Administration, which is incorporated herein by reference in its entirety.

### FIELD

The present disclosure relates to the technical field of wireless communications, and in particular to assist a scheduling electronic apparatus in selecting a candidate time-frequency resource set required for communication by predetermined electronic apparatus(es) in a group to which the scheduling electronic apparatus belongs. More particularly, the present disclosure relates to a scheduling electronic apparatus, a member electronic apparatus, and a method for wireless communications, and a computer-readable storage medium.

### BACKGROUND

In a scenario of group communication (for example, fleet communication), time-frequency resources required for communication between UEs (user equipment) in a group may be determined based on sensing time-frequency resources in a resource pool by a scheduling UE. In a case that the scheduling UE cannot communicate with a scheduling UE in other group and cannot sense occupied and/or reserved resources of the other group, there may be a problem of hidden node, which results in resource conflicts, thereby affecting the reliability of business transmission. Therefore, how to assist the scheduling UE in selecting a candidate time-frequency resource set required for communication by UE in a group to which the scheduling electronic apparatus belongs is a key issue.

### SUMMARY

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, a scheduling electronic apparatus for wireless communications is provided. The scheduling electronic apparatus is configured to select a candidate time-frequency resource set required for communication by predetermined electronic apparatus(es) in a group to which the scheduling electronic apparatus belongs. The scheduling electronic apparatus includes processing circuitry configured to: receive, from at least one member electronic apparatus located in an overlapping zone of the group and other group, an assistance sensing result obtained by sensing time-frequency resources during at least part of an assistance resource sensing window by the at least one member electronic apparatus, to assist the scheduling electronic apparatus in selecting the candidate time-frequency resource set, where the assistance resource sensing window is a time period for the at least one member electronic apparatus to sense the time-frequency resources for the assistance.

According to an aspect of the present disclosure, a member electronic apparatus for wireless communications is provided. The member electronic apparatus is located in an overlapping zone of a group to which the member electronic apparatus belongs and other group. The member electronic apparatus includes processing circuitry configured to: report an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group, where the assistance resource sensing window is a time period for at least one member electronic apparatus including the member electronic apparatus located in the overlapping zone to sense the time-frequency resources for the assistance.

According to another aspect of the present disclosure, a method for wireless communications is provided. The method is performed by a scheduling electronic apparatus for selecting a candidate time-frequency resource set required for communication by predetermined electronic apparatus(es) in a group to which the scheduling electronic apparatus belongs. The method includes: receiving, from at least one member electronic apparatus located in an overlapping zone of the group and other group, an assistance sensing result obtained by sensing time-frequency resources during at least part of an assistance resource sensing window by the at least one member electronic apparatus, to assist the scheduling electronic apparatus in selecting the candidate time-frequency resource set, where the assistance resource sensing window is a time period for the at least one member electronic apparatus to sense the time-frequency resources for the assistance.

According to another aspect of the present disclosure, a method for wireless communications is provided. The method is performed by a member electronic apparatus located in an overlapping zone of a group to which the member electronic apparatus belongs and other group. The method includes: reporting an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group, where the assistance resource sensing window is a time period for at least one member electronic apparatus including the member electronic apparatus located in the overlapping zone to sense the time-frequency resources for the assistance.

According to other aspects of the present disclosure, there are further provided computer program codes and computer program products for implementing the methods for wireless communications above, and a computer readable storage medium having recorded thereon the computer program codes for implementing the methods for wireless communications described above.

These and other advantages of the present disclosure will be more apparent through the following detailed description of preferred embodiments of the present disclosure in conjunction with the drawings.

### BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:
Figure 1 is a block diagram showing functional modules of a scheduling electronic apparatus for wireless communications according to an embodiment of the present disclosure;
Figure 2 is a diagram showing an example of a group according to an embodiment of the present disclosure;
Figure 3 is a diagram showing an example of an original resource sensing window of a member electronic apparatus according to an embodiment of the present disclosure;
Figure 4 is a diagram showing an example of an indicator indicating whether to assist a scheduling electronic apparatus in selecting a candidate time-frequency resource set according to an embodiment of the present disclosure;
Figure 5 is a diagram showing an example of subgroups according to an embodiment of the present disclosure;
Figure 6 is a diagram showing an example of a subgroup assistance resource sensing window of a member electronic apparatus according to an embodiment of the present disclosure;
Figure 7 is a diagram showing another example of a subgroup assistance resource sensing window of a member electronic apparatus according to an embodiment of the present disclosure;
Figure 8 is a diagram showing information exchange of the member electronic apparatus assisting a scheduling electronic apparatus in sensing resources according to an embodiment of the present disclosure;
Figure 9 is a diagram showing information exchange of the member electronic apparatus assisting a scheduling electronic apparatus in sensing resources according to another embodiment of the present disclosure;
Figure 10 is a block diagram showing functional modules of a member electronic apparatus for wireless communications according to an embodiment of the present disclosure;
Figure 11 is a flowchart of a method for wireless communications according to an embodiment of the present disclosure;
Figure 12 is a flowchart of a method for wireless communications according to another embodiment of the present disclosure;
Figure 13 is a block diagram showing a first example of a schematic configuration of an eNB or gNB to which the technology of the present disclosure can be applied;
Figure 14 is a block diagram showing a second example of a schematic configuration of an eNB or gNB to which the technology of the present disclosure can be applied;
Figure 15 is a block diagram showing an example of a schematic configuration of a smart phone to which the technology of the present disclosure can be applied;
Figure 16 is a block diagram showing an example of a schematic configuration of automobile navigation equipment to which the technology of the present disclosure can be applied; and
Figure 17 is a block diagram of an exemplary structure of a personal computer that can be applied to the embodiments of the present disclosure.

### DETAILED DESCRIPTION OF EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a service, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

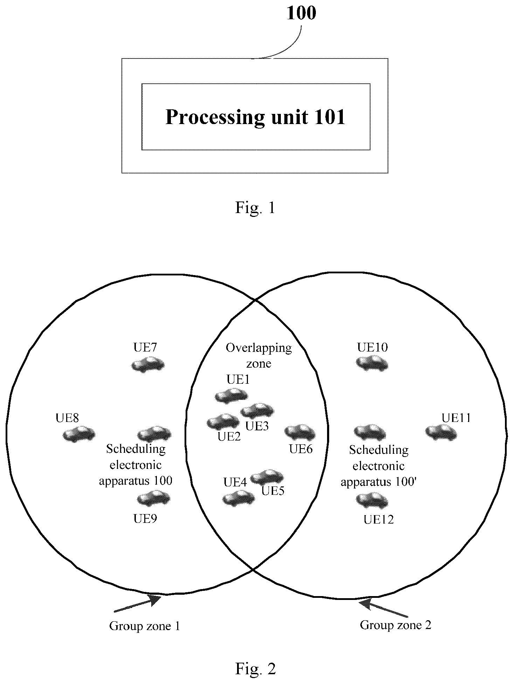

Figure 1 is a block diagram showing functional modules of a scheduling electronic apparatus 100 for wireless communications according to an embodiment of the present disclosure. As shown in Figure 1, the scheduling electronic apparatus includes a processing unit 101 configured to: receive, from at least one member electronic apparatus located in an overlapping zone of a group to which the scheduling electronic apparatus 100 belongs and other group, an assistance sensing result obtained by sensing time-frequency resources during at least part of an assistance resource sensing window by the at least one member electronic apparatus, to assist the scheduling electronic apparatus 100 in selecting the candidate time-frequency resource set. The assistance resource sensing window is a time period for the at least one member electronic apparatus to sense the time-frequency resources for the assistance.

The processing unit 101 may be implemented by one or more processing circuitry. The processing circuitry may be implemented as, for example, a chip.

The scheduling electronic apparatus 100 may be arranged on the user equipment (UE) side or communicably connected to the user equipment. Here it should be further pointed out that the scheduling electronic apparatus 100 may be implemented at a chip level or an apparatus level. For example, the scheduling electronic apparatus 100 may function as a user equipment itself and further include external apparatuses such as a memory and a transceiver (which are not shown in the drawings). The memory may be configured to store programs to be executed and related data information required for the user equipment to implement various functions. The transceiver may include one or more communication interfaces to support communications with various apparatuses (for example, base station, other user equipment or the like). Implementations of the transceiver are not limited herein. The base station, for example, may be an eNB or a gNB.

As an example, the group may be a vehicle group in V2X (vehicle-to-everything). As an example, the group may be a user group involved in public safety. As an example, the group may be a user group involved in commercial applications. Those skilled in the art can think of other examples of the group, which is not repeated here.

The group includes a scheduling electronic apparatus and a member electronic apparatus.

The scheduling electronic apparatus 100 may be configured to elect a candidate time-frequency resource set required for communication by predetermined electronic apparatus(es) in a group to which the scheduling electronic apparatus 100 belongs. The predetermined electronic apparatus may be at least part of electronic apparatus included in the group to which the scheduling electronic apparatus 100 belongs. As an example, the scheduling electronic apparatus 100 may select a candidate time-frequency resource set required for communication between all electronic apparatus (for example, communication between the scheduling electronic apparatus 100 and the member electronic apparatus, and communication between different member electronic apparatuses) in the group to which the scheduling electronic apparatus 100 belongs. As an example, the scheduling electronic apparatus 100 may select a candidate time-frequency resource set required for communication by part of electronic apparatuses (for example, part of the communication between the scheduling electronic apparatus 100 and the member electronic apparatus and the communication between different member electronic apparatuses) in the group to which the scheduling electronic apparatus 100 belongs. As an example, the scheduling electronic apparatus 100 may select a candidate time-frequency resource set from a predetermined resource pool.

Figure 2 is a diagram showing an example of a group according to an embodiment of the present disclosure. As shown in Figure 2, the scheduling electronic apparatus 100 and member electronic apparatuses UE1 to UE9 that are located in a group zone 1 belong to a group a. A scheduling electronic apparatus 100', member electronic apparatuses UE1 to UE6 and member electronic apparatuses UE10 to UE12 that are located in a group zone 2 belong to a group b. As shown in Figure 2, the member electronic apparatuses UE1 to UE6 are located in an overlapping zone of the group a and the group b.

In Figure 2, the scheduling electronic apparatus 100 and the scheduling electronic apparatus 100' cannot communicate with each other, so that the scheduling electronic apparatus 100 may not sense a resource-usage condition (for example, resource reservation and/or resource occupation) of the scheduling electronic apparatus 100'. Therefore, the scheduling electronic apparatus 100' is a hidden node for the scheduling electronic apparatus 100. If the scheduling electronic apparatus 100 selects a candidate time-frequency resource set only by itself sensing time-frequency resources, there may be a problem of hidden node, resulting in resource conflicts.

The scheduling electronic apparatus 100 may receive an assistance sensing result from some or all member electronic apparatus located in the overlapping zone of the group a and the group b. Hereafter, it is assumed that the scheduling electronic apparatus 100 receives the assistance sensing result from member electronic apparatuses, for example, UE1 to UE5.

The member electronic apparatuses UE1 to UE5 are located in the overlapping zone of the group a and the group b, so that the member electronic apparatuses UE1 to UE5 can sense resource usage of the electronic apparatuses in the group a and resource usage of the electronic apparatuses in the group b. The scheduling electronic apparatus 100 receives an assistance sensing result from the member electronic apparatuses UE1 to UE5, so as to sense resource usage of electronic apparatuses in other group (for example, the group b), which avoids the problem of hidden node, thereby improving the reliability of business transmission.

An assistance resource sensing window may be a time period for the member electronic apparatuses UE1 to UE5 to sense time-frequency resources for the assistance. In the embodiments of the present disclosure, the assistance sensing results of the member electronic apparatuses UE1 to UE5 may be obtained by sensing time-frequency resources during part of the assistance resource sensing window. Therefore, the member electronic apparatuses UE1 to UE5 perform partial sensing during part of the assistance resource sensing window instead of full sensing throughout the entire assistance resource sensing window, so as to reduce power consumption of the member electronic apparatuses UE1 to UE5 and meet requirements for energy conservation, which is beneficial for vulnerable-road user apparatuses in V2X, and user equipment requiring minimized energy consumption in public safety and commercial applications.

In 5G NR sidelink communications, there are two resource-selection modes. In a mode, a base station schedules sidelink resources, which is referred to as resource-selection mode 1. In another mode, an electronic apparatus autonomously selects resources, which is referred to as resource-selection mode 2. In a scenario of the resource-selection mode 2 (d) (which is also written as mode 2d), a scheduling electronic apparatus is usually not within a coverage of a base station providing a service for the scheduling electronic apparatus.

As an example, the processing unit 101 may be configured to select the candidate time-frequency resource set in a scenario of the sidelink resource-selection mode 2(d) in a case that the scheduling electronic apparatus 100 is not within coverage of a network-side electronic apparatus providing a service for the scheduling electronic apparatus 100. For example, the network-side electronic apparatus may be a base station.

Hereafter, the present disclosure is described in combination with the scenario of the sidelink resource-selection mode 2(d). However, those skilled in the art can understand that the description of assisting the scheduling electronic apparatus 100 in selecting a candidate time-frequency resource set below is not limited to the scenario of sidelink resource-selection mode 2 (d), and may be applied to a scenario of assisting a scheduling electronic apparatus in selecting a candidate time-frequency resource set in 4G communications, 5G communications or other communications.

As an example, the processing unit 101 may be configured to determine, based on auxiliary information reported from the member electronic apparatus in the overlapping zone in an event-triggering manner or in a periodical manner, at least one member electronic apparatus for assisting the scheduling electronic apparatus 100 in selecting a candidate time-frequency resource set.

For example, the member electronic apparatus in the overlapping zone is triggered to report auxiliary information upon receiving sidelink control information (SCI) from a scheduling electronic apparatus in other group. The member electronic apparatus in the overlapping zone receives SCI from the scheduling electronic apparatus in other group, indicating that the member electronic apparatus may sense resource usage of the scheduling electronic apparatus in other group.

In the embodiments of the present disclosure, a first-stage SCI or a second-stage SCI includes a group ID field for indicating group information. The first-stage SCI is control information transmitted on a control channel, and the second-stage SCI is control information transmitted on a data channel. As an example, the scheduling electronic apparatus may notify the member electronic apparatus in the group to which the scheduling electronic apparatus belongs of the group ID.

For example, the member electronic apparatus located in the overlapping area, in a case of determining that a group ID of a group to which the member electronic apparatus belongs is different from the group ID included in the first-stage SCI or the second-stage SCI received above, is triggered to report auxiliary information. For example, the member electronic apparatus located in the overlapping zone, when decoding the received SCI, finds that a group ID pre-configured for the member electronic apparatus is the same as the group ID included in the SCI, which indicates that the SCI is received from an electronic apparatus belonging to a same group as the member electronic apparatus. In a case that the group ID pre-configured for the member electronic apparatus is different from the group ID included in the SCI, it indicates that the SCI is received from an electronic apparatus (for example, the scheduling electronic apparatus) belonging to a group different from the group to which the member electronic apparatus belongs. In this case, the member electronic apparatus can sense resource usage of scheduling electronic apparatuses in different groups (for example, the scheduling electronic apparatuses in different groups are hidden nodes for the scheduling electronic apparatus 100). Therefore, the member electronic apparatus is triggered to report auxiliary information to the scheduling electronic apparatus 100 for the scheduling electronic apparatus 100 to determine whether the member electronic apparatus is required to assist in selecting a candidate time-frequency resource set. Those skilled in the art can think of other ways of event triggering, which is not repeated here.

For example, the member electronic apparatus located in the overlapping zone may determine a period for reporting auxiliary information based on factory settings of the member electronic apparatus. For example, the member electronic apparatus located in overlapping zone may determine the period for reporting auxiliary information based on transmission power and/or computing capacity of the member electronic apparatus. Those skilled in the art can think of other ways for determining the period for reporting the auxiliary information by the member electronic apparatus located in the overlapping zone, which is not repeated here.

Here, the present disclosure is described still in conjunction with Figure 2. In Figure 2, the member electronic apparatuses UE1 to UE6 are located in the overlapping zone of the group a and the group b. The scheduling electronic apparatus 100 may determine, based on auxiliary information reported by the member electronic apparatuses UE1 to UE6, UE1 to UE5 as member electronic apparatus for assisting the scheduling electronic apparatus 100 in selecting a candidate time-frequency resource set. That is, the scheduling electronic apparatus 100 may receive an assistance sensing result from the member electronic apparatuses UE1 to UE5.

Although in the above description in conjunction with Figure 2, the member electronic apparatuses UE1 to UE6 located in the overlapping zone of the group a and the group b all report auxiliary information to the scheduling electronic apparatus 100, it can be understood by those skilled in the art that only part of the member electronic apparatuses UE1 to UE6 report auxiliary information to the scheduling electronic apparatus 100. In this case, The scheduling electronic apparatus 100 may determine the member electronic apparatus for assisting the scheduling electronic apparatus 100 in selecting a candidate time-frequency resource set from the member electronic apparatus reporting auxiliary information, which is not repeated here.

As an example, the auxiliary information includes a starting point and an ending point of an original resource sensing window for sensing time-frequency resources, pre-configured for the member electronic apparatus, information indicating whether the member electronic apparatus is power-limited, transmission preparation time of a physical sidelink control channel (PSCCH) and physical sidelink shared channel (PSSCH) of the member electronic apparatus, and a measured value of reference signal receiving power (RSRP) of the member electronic apparatus. The starting point of the original resource sensing window is a time point farthest from a gathering time point among the time points at which the member electronic apparatus is capable of sensing the time-frequency resources. The ending point of the original resource sensing window is a time point nearest to the gathering time point among the time points at which the member electronic apparatus is capable of sensing the time-frequency resources. The gathering time point is a time point at which the member electronic apparatus is capable of gathering sensed time-frequency resources.

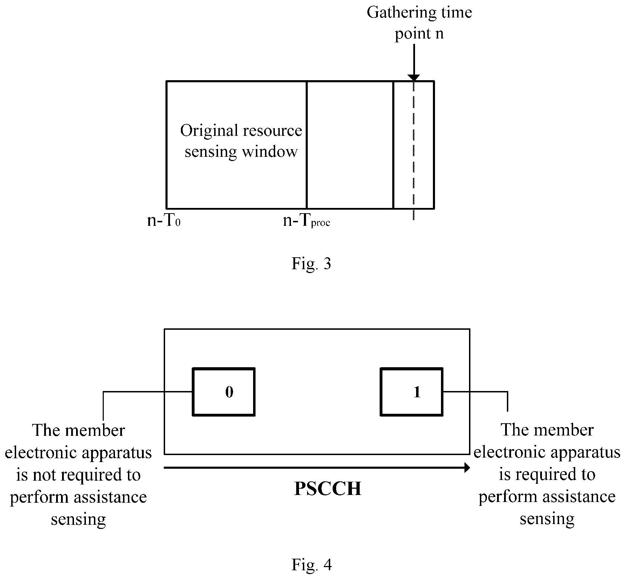

Figure 3 is a diagram showing an example of an original resource sensing window of a member electronic apparatus according to an embodiment of the present disclosure.

In Figure 3, a time point n represents a gathering time point. n-T₀ represents a starting point of the original resource sensing window. n-T_{proc} represents an ending point of the original resource sensing window. A time period from n-T₀ to n-T_{proc} represents the original resource sensing window. T₀ is pre-configured. T_{proc} represents processing time for the member electronic apparatus to decode SCI and perform RSRP measurement, which depends on capability of the member electronic apparatus.

As an example, the information indicating whether the member electronic apparatus is power-limited is used for indicating whether the member electronic apparatus is power-limited or has sufficient power for full sensing.

As an example, the auxiliary information further includes a measurement result of a demodulation reference signal (DMRS) of the member electronic apparatus and/or a value of a subcarrier spacing (SCS) of the member electronic apparatus.

As an example, the processing unit 101 may be configured to send an indicator indicating whether to assist the scheduling electronic apparatus in selecting a candidate time-frequency resource set to the member electronic apparatus located in the overlapping zone through a physical sidelink control channel (PSCCH).

Figure 4 is a diagram showing an example of an indicator indicating whether to assist the scheduling electronic apparatus 100 in selecting a candidate time-frequency resource set according to an embodiment of the present disclosure.

As shown in Figure 4, the indicator is a 1-bit indicator, which may be added in the first-stage SCI or the second-stage SCI. The indicator "0" indicates that member electronic apparatus is not required to assist the scheduling the electronic apparatus 100 in selecting a candidate time-frequency resource set (that member electronic apparatus is not required to perform assistance sensing). The indicator "1" indicates that the member electronic apparatus is required to assist the scheduling electronic apparatus 100 in selecting a candidate time-frequency resource set (the member electronic apparatus is required to perform assistance sensing).

Here, the present disclosure is described still in conjunction with Figure 2. Assistance sensing of the member electronic apparatus UE1 to UE5 rather than the member electronic apparatus UE6 is required by the scheduling electronic apparatus 100, so that the indicator "1" is sent to UE1 to UE5 and the indicator "0" is sent to UE6.

As an example, the processing unit 101 may be configured to divide the at least one member electronic apparatus into different subgroups based on position information of member electronic apparatus and/or a measured value of reference signal receiving power of member electronic apparatus; and determine a subgroup assistance resource sensing window corresponding to each subgroup.

As an example, latitude and longitude, or a zone ID of the member electronic apparatus may serve as the position information of the member electronic apparatus. Hereafter the zone ID serves as the position information of the member electronic apparatus is taken as an example for simplicity of description.

The processing unit 101 may determine a time period during for each subgroup to sense time-frequency resources for assisting the scheduling electronic apparatus 100 in selecting a candidate time-frequency resource set as a subgroup assistance resource sensing window corresponding to the subgroup. A set of subgroup assistance resource sensing windows of all subgroups form the assistance resource sensing window described above.

As an example, the processing unit 101 may be configured to divide the member electronic apparatuses into a same subgroup in a case that the member electronic apparatuses have a same zone ID and a difference between measured values of RSRPs of the member electronic apparatuses is less than a first predetermined threshold.

For example, the zone ID is included in the sidelink control information of the member electronic apparatus.

As an example, the first predetermined threshold may be determined in advance based on experience, simulation, application scenarios, or factory settings.

The member electronic apparatuses have a same zone ID and a difference between measured values of RSRPs of the member electronic apparatuses is less than a first predetermined threshold, indicating that the member electronic apparatuses have close positions and similar channel states. Therefore, assistance sensing results of the member electronic apparatuses may be similar, so that such member electronic apparatuses may be divided into a same subgroup.

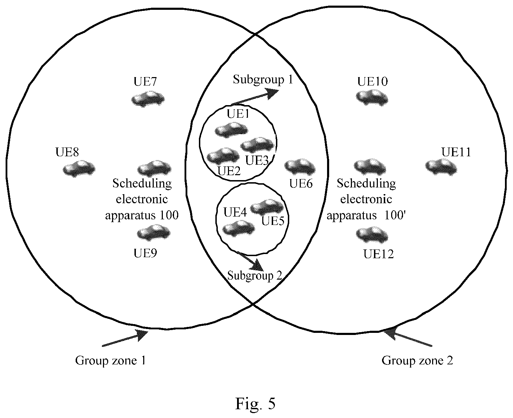

Figure 5 is a diagram showing an example of subgroups according to an embodiment of the present disclosure. It can be seen based on Figure 2 that scheduling electronic apparatus 100 receives assistance sensing results from the member electronic apparatuses UE1 to UE5. As shown in Figure 5, UE1 to UE3 are divided into a subgroup 1, and UE4 and UE5 are divided into a subgroup 2.

As an example, the processing unit 101 may be configured to for each of the subgroups: based on starting points and ending points of original resource sensing windows, which are pre-configured for member electronic apparatuses in the subgroup, for sensing time-frequency resources, determine a starting point and an ending point of the subgroup assistance resource sensing window corresponding to the subgroup, and allocate starting points and ending points of sub-assistance resource sensing windows for the member electronic apparatuses in the subgroup. The starting point of the original resource sensing window is a time point farthest from a gathering time point among the time points at which the member electronic apparatus is capable of sensing the time-frequency resources. The ending point of the original resource sensing window is a time point nearest to the gathering time point among the time points at which the member electronic apparatus is capable of sensing the time-frequency resources. The gathering time point is a time point at which the member electronic apparatus is capable of gathering sensed time-frequency resources.

For example, a set of sub-assistance resource sensing windows for all member electronic apparatuses in a subgroup form a subgroup assistance resource sensing window corresponding to the subgroup.

As an example, the processing unit 101 may be configured to: in a case that original resource sensing windows of all member electronic apparatuses in the subgroup have a same starting point and a same ending point, set the starting point of the original resource sensing window of the member electronic apparatus in the subgroup as the starting point of the subgroup assistance resource sensing window, and set the ending point of the original resource sensing window of the member electronic apparatus in the subgroup as the ending point of the subgroup assistance resource sensing window.

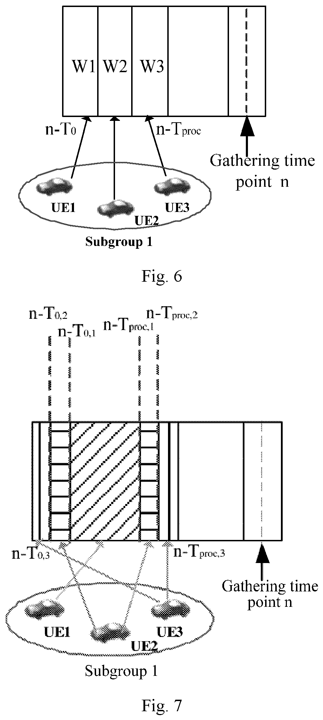

Figure 6 is a diagram showing an example of a subgroup assistance resource sensing window of a member electronic apparatus according to an embodiment of the present disclosure. Figure 6 is described in conjunction with the subgroup 1 (including UE1 to UE3) shown in Figure 5. Assuming that original resource sensing windows for UE1, UE2, and UE3 have a same starting point n-T₀ and have a same ending point n-T_{proc}. In this case, a subgroup assistance resource sensing window corresponding to the subgroup 1 is the original resource sensing window (a time period from n-T₀ to n-T_{proc}) for the member electronic apparatuses in the subgroup.

As an example, the processing unit 101 may be configured to divide the subgroup assistance resource sensing window evenly into M sub-assistance resource sensing windows, where M represents the number of member electronic apparatuses included in the subgroup; and respectively allocate one of the M sub-assistance resource sensing windows for each member electronic apparatus in the subgroup. The sub-assistance resource sensing windows for the member electronic apparatus are described below in conjunction with Figure 5 and Figure 6. The subgroup 1 includes three member electronic apparatus UE1 to UE3 (M=3). Therefore, the subgroup assistance resource sensing window (a time period from n-T₀ to n-T_{proc}) shown in Figure 6 may be evenly divided into three subgroup assistance resource sensing windows (for example, W1 to W3), and the three subgroup assistance resource sensing windows are allocated for UE1 to UE3 respectively. For example, as shown in Figure 6, the subgroup assistance resource sensing window W1 is allocated for UE1, the subgroup assistance resource sensing window W2 is allocated for UE2, and the subgroup assistance resource sensing window W3 is allocated for UE3. In this way, each of UE1, UE2, and UE3 performs resource sensing within one sub-assistance resource sensing window, and UE1 to UE3 perform resource sensing within the entire subgroup assistance resource sensing window. The member electronic apparatuses UE1-UE3 perform resource sensing in cooperation within the subgroup assistance resource sensing window, which is conductive to accurately selecting a candidate time-frequency resource set (for example, ruling out resources used by a hidden node) by the scheduling electronic apparatus 100, and member electronic apparatus UE1-UE3 can reduce energy consumption by sensing separately in the sub group assistance resource sensing window, thus meeting the requirements of energy conservation.

As an example, processing unit 101 may be configured to: in a case that original resource sensing windows of all member electronic apparatuses in the subgroup have starting points not exactly the same or ending points not exactly the same, set an earliest starting point among the starting points of the original resource sensing windows of the member electronic apparatuses in the subgroup as the starting point of the subgroup assistance resource sensing window, and set a latest ending point among the ending points of the original resource sensing windows of the member electronic apparatuses in the subgroup as the ending point of the subgroup assistance resource sensing window. In this way, the member electronic apparatuses in the subgroup can perform assistance sensing during a large subgroup assistance resource sensing window, thereby obtaining a comprehensive assistance sensing result.

Figure 7 is a diagram showing another example of a subgroup assistance resource sensing window for a member electronic apparatus according to an embodiment of the present disclosure. Figure 7 is described still in conjunction with the subgroup 1 (including UE1 to UE3) shown in Figure 5. It is assumed that an original resource sensing window for UE1 has a starting point n-T₀,₁ and an ending point is n-T_{proc, 1}, an original resource sensing window for UE2 has a starting point n-T₀,₂ and an ending point is n-T_{proc, 2}, and an original resource sensing window for UE3 has a starting point n-T₀,₃ and an ending point is n-T_{proc}, ₃, where n-T_{0,3}<n-T_{0,2}<n-T_{0,1}, and n-T_{proc, 1}<n-T_{proc, 2}<n-T_{proc, 3}. In this example, a starting point of the subgroup assistance resource sensing window corresponding to the subgroup 1 is determined as n-T_{0,3}, and an ending point of the subgroup assistance resource sensing window corresponding to the subgroup 1 is determined as n-T_{proc, 3}. That is, the subgroup assistance resource sensing window corresponding to the subgroup 1 is determined to be a time period from n-T_{0,3} to n-T_{proc, 3}.

As an example, the processing unit 101 may be configured to: in a case that original resource sensing windows of all member electronic apparatuses in the subgroup are nested level by level, determine, for a member electronic apparatus having an original resource sensing window which is at a lowest level and has a smallest length in the subgroup, the original resource sensing window of the member electronic apparatus as a sub-assistance resource sensing window of the member electronic apparatus; and determine, for other member electronic apparatus in the subgroup, a time period from a starting point of an original resource sensing window of the other member electronic apparatus to a starting point of a next level of original resource sensing window for the original resource sensing window of the other member electronic apparatus and a time period from an ending point of the next level of original resource sensing window to an ending point of the original resource sensing window of the other member electronic apparatus, as an sub-assistance resource sensing window of the other member electronic apparatus.

For example, a next level of original resource sensing window for the original resource sensing window of the other member electronic apparatus is an original resource sensing window having a largest length within the original resource sensing window of the other member electronic apparatus.

As shown in Figure 7, n-T_{0,3}<n-T_{0,2}<n-T_{0,1} and n-T_{proc, 1}<n-T_{proc, 2}<n-T_{proc, 3}, so that the original resource sensing windows of UE1 to UE3 are nested level by level. A length of the original resource sensing window of UE1 is the smallest, so that it can be considered that UE1 has the weakest sensing ability among UE1 to UE3. A length of the original resource sensing window of UE3 is the largest, so that it can be considered that UE3 has the strongest sensing ability among UE1 to UE3. The original resource sensing window of UE1 is at the lowest level in this subgroup. That is, the original resource sensing window of UE1 has the smallest length. The original resource sensing window of UE3 is at the highest level in the subgroup. That is, the original resource sensing window of UE3 has the largest length. The scheduling electronic apparatus 100 determines the original resource sensing window (a time period from n-T_{0,1} to n-T_{proc, 1}, covered by diagonal in Figure 7) of UE1 as a sub-assistance resource sensing window of UE1. For UE2, a next level of the original resource sensing window of UE2 is the original resource sensing window of UE1. The scheduling electronic apparatus 100 determines a time period from the starting point n-T_{0,2} of the original resource sensing window of UE2 to the starting point n-T_{0,1} of the original resource sensing window of UE1, and a time period from the ending point n-T_{proc,1} of the original resource sensing window of UE1 to the ending point n-T_{proc,2} of the original resource sensing window of UE2 (i.e., a time period from n-T_{0,2} to n-T_{0,1} and a time period from n-T_{proc, 1} to n-T_{proc, 2}, covered by horizontal lines in Figure 7) as a sub-assistance resource sensing window of UE2. For UE3, a next level of the original resource sensing window of UE3 is the original resource sensing window of UE2. The scheduling electronic apparatus 100 determines a time period from the starting point n-T_{0,3} of the original resource sensing window of UE3 to the starting point n-T_{0,2} of the original resource sensing window of UE2, and a time period from the ending point n-T_{proc,2} of the original resource sensing window of UE2 to the ending point n-T_{proc,3} of the original resource sensing window of UE3 (i.e., a time period from n-T_{0,3} to n-T_{0,2} and a time period from n-T_{proc, 2} to n-T_{proc, 3}, covered by vertical lines in Figure 7) as a sub-assistance resource sensing window of UE3. It can be seen based on Figure 7 that UE1 with the weakest sensing ability senses an intermediate overlapping interval of the original resource sensing windows of UE1 to UE3, and UE3 with the strongest sensing ability senses the intervals, not overlapping with other interval, in the original resource sensing windows of UE1 to UE3. The member electronic apparatuses UE1-UE3 perform resource sensing in cooperation within the subgroup assistance resource sensing window, which is conductive to accurately selecting a candidate time-frequency resource set (for example, ruling out resources used by a hidden node) by the scheduling electronic apparatus 100, and member electronic apparatus UE1-UE3 can reduce energy consumption by sensing separately in the sub group assistance resource sensing window, thus meeting the requirements of energy conservation.

As an example, the processing unit 101 may be configured to notify the member electronic apparatuses in the subgroup of information about sub-assistance resource sensing window of the member electronic apparatus.

As an example, the processing unit 101 may be configured to perform the above notification through a time-domain-resource information field in sidelink control information (SCI). For example, the SCI for the above notification is a second-stage SCI. For example, when the scheduling electronic apparatus 100 requires the member electronic apparatus to quickly perform assistance sensing to assist the scheduling electronic apparatus 100 in selecting a candidate time-frequency resource set, a time-domain-resource information field is added in the second-stage SCI to notify the information about the sub-assistance resource sensing window of the member electronic apparatus. A format of the time-domain-resource information field may be with reference to a time-domain-resource information field in a first-stage SCI in the conventional technology (for example, TS 38.212).

As an example, the processing unit 101 may be configured to perform the above notification through a PSSCH and indicate a position of the information about the sub-assistance resource sensing window of the member electronic apparatus in the PSSCH through an indicator in SCI.

As an example, the processing unit 101 may be configured to perform the above notification through PC5 radio resource control (PC5 RRC) signaling. For example, the scheduling electronic apparatus 100 may periodically notify the information about the sub-assistance resource sensing window of the member electronic apparatus through the PC5 RRC signaling. A control channel of a physical layer is not occupied in this notification manner, so that control channel resources of the physical layer are saved.

As an example, the processing unit 101 may be configured to reflect information about the group through a group ID field in sidelink control information. For example, the information about the group is reflected through a group ID field in the first-stage SCI or the second-stage SCI. That is, an ID of the group to which the scheduling electronic apparatus 100 belongs is represented by the group ID field in the first-stage SCI or the second-stage SCI.

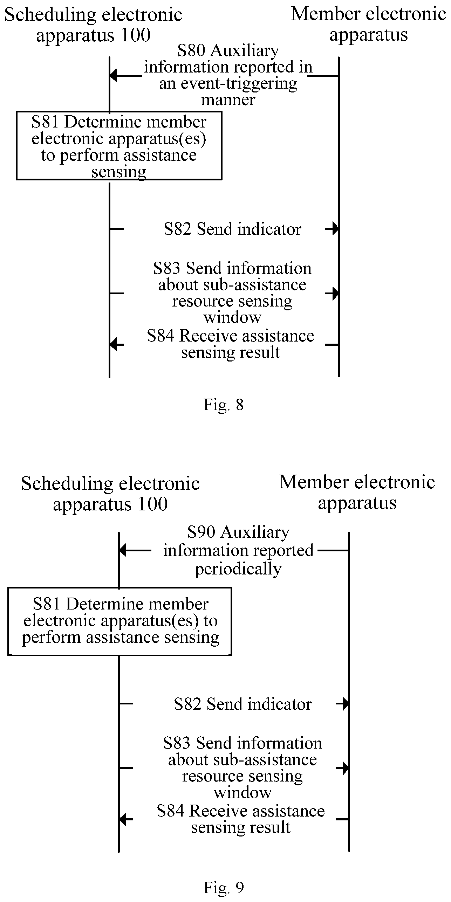

Figure 8 is a diagram showing information exchange of the member electronic apparatus assisting the scheduling electronic apparatus 100 in sensing resources according to an embodiment of the present disclosure.

In step S80, the scheduling electronic apparatus 100 receives auxiliary information reported by the member electronic apparatus in an event-triggering manner. In step S81, the scheduling electronic apparatus 100 determines member electronic apparatus(es) for assisting the scheduling electronic apparatus 100 in selecting a candidate time-frequency resource set based on the auxiliary information (that is, determining member electronic apparatus(es) to perform assistance sensing). In step S82, the scheduling electronic apparatus 100 sends an indicator indicating whether to assist the scheduling electronic apparatus in selecting a candidate time-frequency resource set to the member electronic apparatus(es) reporting the auxiliary information. In step S83, the scheduling electronic apparatus 100 sends information about a sub-assistance resource sensing window to member electronic apparatus(es) that are determined to perform assistance sensing. In step S84, the scheduling electronic apparatus 100 receives an assistance sensing result from the member electronic apparatus(es) that are determined to perform assistance sensing.

Figure 9 is a diagram showing information exchange of the member electronic apparatus assisting the scheduling electronic apparatus 100 in sensing resources according to another embodiment of the present disclosure.

Figure 9 is different from Figure 8 only in that step S80 is replaced by step S90. In step S90, the scheduling electronic apparatus 100 receives auxiliary information periodically reported by the member electronic apparatus. For details of steps S81 to S84 in Figure 9, reference may be made to Figure 8, which is not repeated here.

The scheduling electronic apparatus 100 may select a candidate time-frequency resource set referring to an assistance sensing result provided by the at least one member electronic apparatus. Alternatively, the scheduling electronic apparatus 100 may select a candidate time-frequency resource set only using an original resource sensing window pre-configured by the scheduling electronic apparatus 100 without referring to the assistance sensing result provided by the at least one member electronic apparatus.

As an example, the processing unit 101 may be configured to: in case that a performance change of electronic apparatuses in the group to which the scheduling electronic apparatus 100 belongs is greater than a second predetermined threshold and/or in a case that the electronic apparatuses constituting the group to which the scheduling electronic apparatus 100 belongs change, redetermine the at least one member electronic apparatus for assisting the scheduling electronic apparatus 100 in selecting the candidate time-frequency resource set and/or re-divide the at least one member electronic apparatuses into different subgroups. In this way, the scheduling electronic device 100 is assisted in selecting a candidate time-frequency resource set accurately.

As an example, the performance of the electronic apparatus may include power consumption of the electronic apparatus, a battery remaining life, and the like. As an example, the second predetermined threshold may be set in advance based on experience, simulation, or application scenarios.

The present disclosure is described still in conjunction with Figure 2. It is assumed that the groups in Figure 2 are vehicle groups in vehicle-to-everything. Taking the group a as an example, a change of the electronic apparatuses constituting the group a may refer to that, for example, a UE in the group a drives out of the group zone 1 of the group a, and/or a UE in the group b drives into the group zone 1 of the group a.

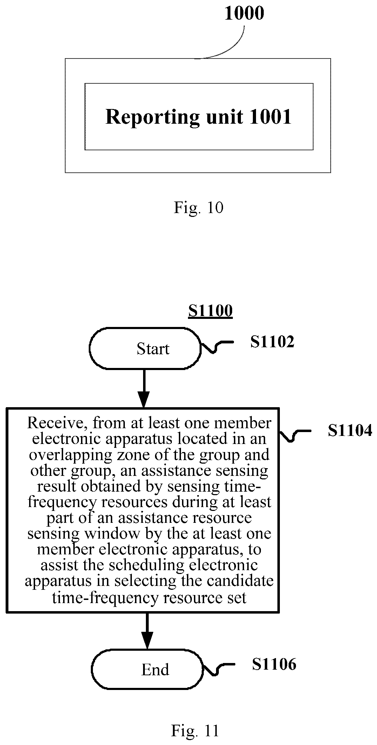

A member electronic apparatus for wireless communications is further provided according to the present disclosure. Figure 10 is a block diagram showing functional modules of a member electronic apparatus 1000 for wireless communications according to an embodiment of the present disclosure. The member electronic apparatus 1000 is located in an overlapping zone of a group to which the member electronic apparatus belongs and other group. The member electronic apparatus 1000 includes a reporting unit 1001. The reporting unit 1001 may be configured to: report an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group. The assistance resource sensing window is a time period for at least one member electronic apparatus including the member electronic apparatus 1000 located in the overlapping zone to sense the time-frequency resources for the assistance.

The reporting unit 1001 may be implemented by one or more processing circuitry. The processing circuitry may be implemented as, for example, a chip.

The member electronic apparatus 1000 may be arranged on the user equipment (UE) side or communicably connected to the user equipment. Here it should be further pointed out that the member electronic apparatus 1000 may be implemented at a chip level or an apparatus level. For example, the member electronic apparatus 1000 may function as a user equipment itself and further include external apparatuses such as a memory and a transceiver (which are not shown in the drawings). The memory may be configured to store programs to be executed and related data information required for the user equipment to implement various functions. The transceiver may include one or more communication interfaces to support communications with various apparatuses (for example, base station, other user equipment or the like). Implementations of the transceiver are not limited herein. The base station, for example, may be an eNB or a gNB.

As an example, the scheduling electronic apparatus may be the scheduling electronic apparatus 100 described above.

Details of the group, the overlapping zone, the predetermined electronic apparatus, and the assistance resource sensing window may be with reference to the description of the description of the processing unit 101 and Figure 2 in the embodiments of the scheduling electronic apparatus 100, which are not repeated here.

The member electronic apparatus 1000 according to the embodiments of the present disclosure is located in the overlapping zone of the group to which the member electronic apparatus 1000 belongs and other group, and is capable of sensing resource usage of electronic apparatus in other group. Therefore, the member electronic apparatus 1000 is capable of assisting the scheduling electronic apparatus in the group to which the member electronic apparatus 1000 belongs in selecting a candidate time-frequency resource set, which avoids a problem of hidden node, thereby improving the reliability of business transmission. In addition, the assistance sensing results of the member electronic apparatus 1000 according to the embodiments of the present disclosure may be obtained by sensing time-frequency resources during part of the assistance resource sensing window. Therefore, the member electronic apparatus 1000 performs partial sensing during part of the assistance resource sensing window instead of full sensing throughout the entire assistance resource sensing window, so as to reduce power consumption of the member electronic apparatus 1000 and meet requirements for energy conservation, which is beneficial for vulnerable-road user apparatuses in V2X, and user equipment requiring minimized energy consumption in public safety and commercial applications.

As an example, the reporting unit 1001 may be configured to send auxiliary information for assisting the scheduling electronic apparatus in selecting the candidate time-frequency resource set to the scheduling electronic apparatus in an event-triggering manner or a periodical manner. For example, the scheduling electronic apparatus may determine, based on the received auxiliary information, a member electronic apparatus for assisting the scheduling electronic apparatus in selecting a candidate time-frequency resource set.

As an example, the reporting unit 1001 may be configured to be triggered to send the auxiliary information upon receiving sidelink control information (SCI) from a scheduling electronic apparatus in the other group. The member electronic apparatus 1000 receives SCI from a scheduling electronic apparatus in other group, which indicates that the member electronic apparatus 1000 may sense resource usage of the scheduling electronic apparatus in other groups.

As mentioned in the embodiments of the scheduling electronic apparatus 100, in the present disclosure, the first-stage SCI or the second-stage SCI includes a group ID field for indicating group information.

As an example, the reporting unit 1001 may be configured to be triggered to send the auxiliary information in a case of determining that an ID of the group to which the member electronic apparatus belongs is different from the group ID included in the first-stage SCI or the second-stage SCI.

Those skilled in the art can think of other ways of event triggering, which is not repeated here.

As an example, the reporting unit 1001 may be configured to determine a period for sending the auxiliary information based on factory settings of the member electronic apparatus 1000.

As an example, the reporting unit 1001 may be configured to determine a period for sending the auxiliary information based on transmission power and/or computing capacity of the member electronic apparatus 1000.

Those skilled in the art can think of other ways for determining the period for reporting the auxiliary information by the member electronic apparatus 1000, which is not repeated here.

As an example, the auxiliary information includes a starting point and an ending point, of an original resource sensing window for sending the time- frequency resources, pre-configured for the member electronic apparatus 1000, information indicating whether the member electronic apparatus 1000 is power-limited, transmission preparation time of a physical sidelink control channel and physical sidelink shared channel of the member electronic apparatus 1000, and a measured value of reference signal receiving power of the member electronic apparatus 1000. The starting point of the original resource sensing window is a time point farthest from a gathering time point among the time points at which the member electronic apparatus 1000 is capable of sensing the time-frequency resources. The ending point of the original resource sensing window is a time point nearest to the gathering time point among the time points at which the member electronic apparatus 1000 is capable of sensing the time-frequency resources. The gathering time point is a time point at which the member electronic apparatus 1000 is capable of gathering sensed time-frequency resources.

As an example, the auxiliary information further includes a measurement result of demodulation reference signal of the member electronic apparatus 1000 and/or a value of a subcarrier spacing of the member electronic apparatus 1000.

As an example, the reporting unit 1001 may be configured to report the assistance sensing result through media access control control elements (MAC CE) or sidelink control information.

As an example, the assistance sensing result includes a zone ID of the member electronic apparatus 1000, and information about time-frequency resources sensed by the member electronic apparatus 1000 during at least part of the assistance resource sensing window. For example, the information about the time-frequency resources sensed by the member electronic apparatus 1000 during at least part of the assistance resource sensing window reflects which time-frequency resources are available, and/or which time-frequency resources are not available because the time-frequency resources are used (reserved and/or occupied) by other electronic apparatus.

As an example, the assistance sensing result further includes an ID of the group to which the member electronic apparatus 1000 belongs.

In the above description of embodiments of the electronic apparatuses for wireless communications, it is apparent that some processing and methods are further disclosed. In the following, a summary of the methods are described without repeating details that are described above. However, it should be noted that although the methods are disclosed when describing the electronic apparatuses for wireless communications, the methods are unnecessary to adopt those components or to be performed by those components described above. For example, implementations of the electronic apparatuses for wireless communications may be partially or completely implemented by hardware and/or firmware. Methods for wireless communications to be discussed blow may be completely implemented by computer executable programs, although these methods may be implemented by the hardware and/or firmware for implementing the electronic apparatuses for wireless communications

Figure 11 is a flowchart of a method S 1100 for wireless communications according to an embodiment of the present disclosure. The method S 1100 is performed by a scheduling electronic apparatus for selecting a candidate time-frequency resource set required for communication by predetermined electronic apparatus(es) in a group to which the scheduling electronic apparatus belongs. The method S1100 starts at step S 1102. In step S1 104, an assistance sensing result obtained by sensing time-frequency resources during at least part of an assistance resource sensing window by at least one member electronic apparatus located in an overlapping zone of the group and other group is received from the at least one member electronic apparatus, to assist the scheduling electronic apparatus in selecting the candidate time-frequency resource set. The method S 1100 ends at step S 1106.

The method may be performed, for example, by the scheduling electronic apparatus 100 described in the above embodiments. For details, one may refer to the above description, and the details are not repeated here.

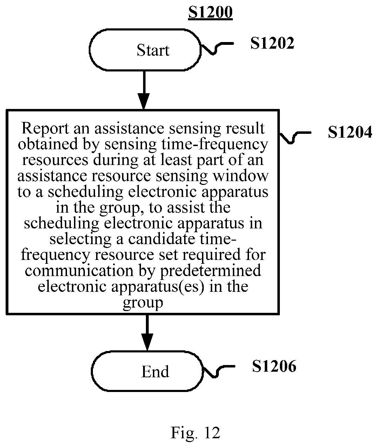

Figure 12 is a flowchart of a method S1200 for wireless communications according to another embodiment of the present disclosure. The method S1200 is performed by a member electronic apparatus located in an overlapping zone of a group to which the member electronic apparatus belongs and other group. The method S1200 starts at step S1202. In step S1204, an assistance sensing result obtained by sensing time-frequency resources during at least part of an assistance resource sensing window is reported to a scheduling electronic apparatus in the group, to assist the scheduling electronic apparatus in selecting a candidate time-frequency resource set required for communication by predetermined electronic apparatus(es) in the group. The method S1200 ends at step S1206.

The method may be performed, for example, by the member electronic apparatus 1000 described in the above embodiments. For details, one may refer to the above description, and the details are not repeated here.

The technology of the present disclosure can be applied to various products.

The scheduling electronic apparatus 100 and the member electronic apparatus 1000 may be implemented as various user equipment. The user equipment may be implemented as a mobile terminal (such as a smart phone, a tablet personal computer (PC), a notebook PC, a portable game terminal, a portable/dongle type mobile router, and a digital camera) or a vehicle-mounted terminal (such as an automobile navigation device). The user equipment may also be implemented as a terminal (also referred to as a machine type communication (MTC) terminal) that executes Machine-to-Machine (M2M) communications. In addition, the user equipment may be a wireless communication module (such as an integrated circuitry module including a single chip) installed on each of the above-mentioned terminals.

### [Application Examples About Base Station]

### (First Application Example)

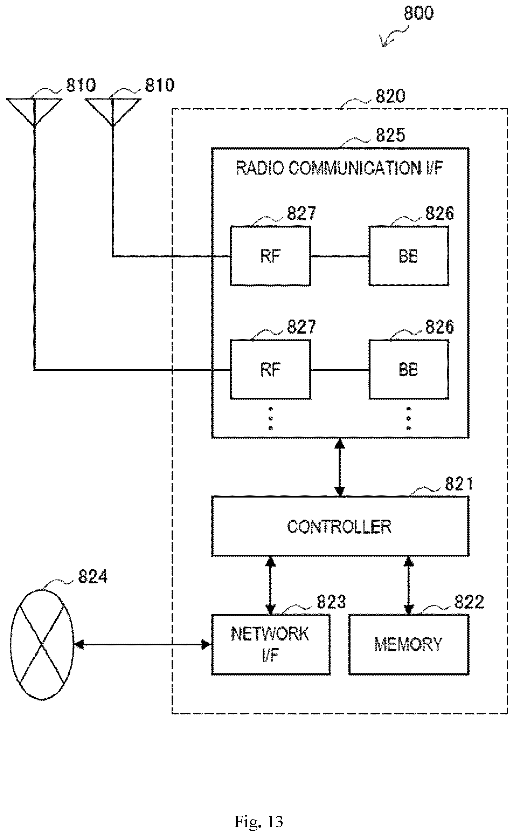

Figure 13 is a block diagram showing a first example of a schematic configuration of an eNB or gNB to which the technology of the present disclosure can be applied. Note that, the following description takes an eNB as an example, but it may also be applied to a gNB. An eNB 800 includes one or more antennas 810 and base station equipment 820. The base station equipment 820 and each antenna 810 may be connected to each other via an RF cable.

Each of the antennas 810 includes a single or multiple antenna elements (such as multiple antenna elements included in a Multi-Input Multi-Output (MIMO) antenna), and is used for the base station equipment 820 to transmit and receive wireless signals. As shown in Figure 13, the eNB 800 may include multiple antennas 810. For example, the multiple antennas 810 may be compatible with multiple frequency bands used by the eNB 800. Although Figure 13 shows an example in which the eNB 800 includes multiple antennas 810, the eNB 800 may also include a single antenna 810.

The base station equipment 820 includes a controller 821, a memory 822, a network interface (I/F) 823, and a radio communication interface 825.

The controller 821 may be, for example, a CPU or a DSP, and manipulate various functions of a higher layer of the base station equipment 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have a logical function for performing control such as radio resource control, radio bearer control, mobility management, admission control, and scheduling. The control may be executed in conjunction with nearby eNBs or core network nodes. The memory 822 includes an RAM and an ROM, and stores programs executed by the controller 821 and various types of control data (such as a terminal list, transmission power data, and scheduling data).

The network interface 823 is a communication interface for connecting the base station equipment 820 to a core network 824. The controller 821 may communicate with the core network node or another eNB via the network interface 823. In this case, the eNB 800 and the core network node or other eNBs may be connected to each other through a logical interface (such as an S1 interface and an X2 interface). The network interface 823 may also be a wired communication interface, or a wireless communication interface for a wireless backhaul line. If the network interface 823 is a wireless communication interface, the network interface 823 may use a higher frequency band for wireless communications than the frequency band used by the radio communication interface 825.

The radio communication interface 825 supports any cellular communication scheme (such as Long Term Evolution (LTE) and LTE-Advanced), and provides wireless connection to a terminal located in a cell of the eNB 800 via an antenna 810. The radio communication interface 825 may generally include, for example, a baseband (BB) processor 826 and an RF circuitry 827. The BB processor 826 may execute, for example, encoding/decoding, modulation/demodulation, and multiplexing/demultiplexing, and execute various types of signal processing of layers (e.g., L1, Medium Access Control (MAC), Radio Link Control (RLC), and Packet Data Convergence Protocol (PDCP)). Instead of the controller 821, the BB processor 826 may have a part or all of the above-mentioned logical functions. The BB processor 826 may be a memory storing a communication control program, or a module including a processor and related circuitry configured to execute the program. An update program may cause the function of the BB processor 826 to be changed. The module may be a card or blade inserted into a slot of the base station equipment 820. Alternatively, the module may also be a chip mounted on a card or blade. Meanwhile, the RF circuitry 827 may include, for example, a mixer, a filter, and an amplifier, and transmit and receive a wireless signal via the antenna 810.

As shown in Figure 13, the radio communication interface 825 may include multiple BB processors 826. For example, the multiple BB processors 826 may be compatible with multiple frequency bands used by the eNB 800. As shown in Figure 13, the radio communication interface 825 may include multiple RF circuitry 827. For example, the multiple RF circuitry 827 may be compatible with multiple antenna elements. Although Figure 13 shows an example in which the radio communication interface 825 includes multiple BB processors 826 and multiple RF circuitry 827, the radio communication interface 825 may also include a single BB processor 826 or a single RF circuitry 827.

In the eNB 800 as shown in Figure 13, the transceiver may be implemented by a radio communication interface 825. At least part of the function may also be implemented by the controller 821.

### (Second Application Example)

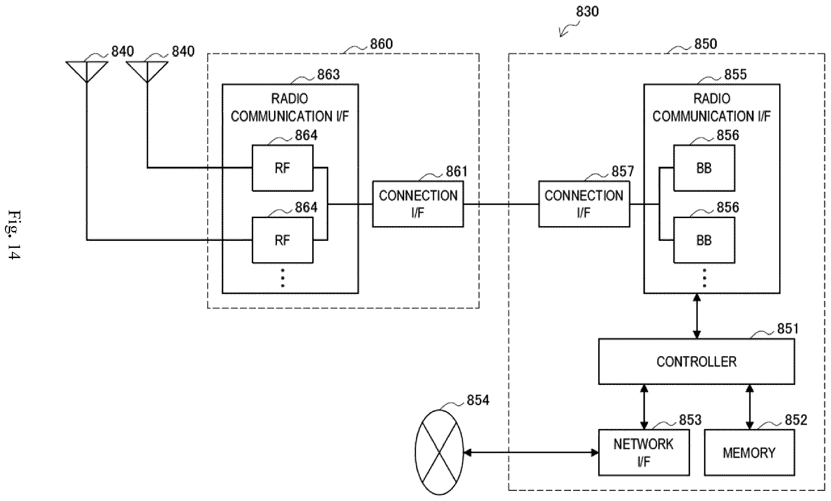

Figure 14 is a block diagram showing a second example of a schematic configuration of an eNB or gNB to which the technology of the present disclosure can be applied. Note that similarly, the following description takes an eNB as an example, but it may also be applied to a gNB. An eNB 830 includes one or more antennas 840, base station equipment 850, and an RRH 860. The RRH 860 and each antenna 840 may be connected to each other via an RF cable. The base station equipment 850 and the RRH 860 may be connected to each other via a high-speed line such as an optical fiber cable.

Each of the antennas 840 includes a single or multiple antenna elements (such as multiple antenna elements included in a MIMO antenna) and is used for the RRH 860 to transmit and receive a wireless signal. As shown in Figure 14, the eNB 830 may include multiple antennas 840. For example, the multiple antennas 840 may be compatible with multiple frequency bands used by the eNB 830. Although Figure 14 shows an example in which the eNB 830 includes multiple antennas 840, the eNB 830 may also include a single antenna 840.

The base station equipment 850 includes a controller 851, a memory 852, a network interface 853, a radio communication interface 855, and a connection interface 857. The controller 851, the memory 852, and the network interface 853 are the same as the controller 821, the memory 822, and the network interface 823 as described with reference to Figure 13.

The radio communication interface 855 supports any cellular communication scheme (such as LTE and LTE-Advanced), and provides wireless communications to a terminal located in a sector corresponding to the RRH 860 via the RRH 860 and the antenna 840. The radio communication interface 855 may generally include, for example, a BB processor 856. The BB processor 856 is the same as the BB processor 826 as described with reference to Figure 13 except that the BB processor 856 is connected to the RF circuitry 864 of the RRH 860 via the connection interface 857. As shown in Figure 14, the radio communication interface 855 may include multiple BB processors 856. For example, the multiple BB processors 856 may be compatible with multiple frequency bands used by the eNB 830. Although Figure 14 shows an example in which the radio communication interface 855 includes multiple BB processors 856, the radio communication interface 855 may also include a single BB processor 856.

The connection interface 857 is an interface for connecting the base station equipment 850 (radio communication interface 855) to the RRH 860. The connection interface 857 may also be a communication module for communication in the above-mentioned high-speed line that connects the RRH 860 to the base station equipment 850 (radio communication interface 855).

The RRH 860 includes a connection interface 861 and a radio communication interface 863.

The connection interface 861 is an interface for connecting the RRH 860 (radio communication interface 863) to the base station equipment 850. The connection interface 861 may also be a communication module for communication in the above-mentioned high-speed line.

The radio communication interface 863 transfers and receives wireless signals via the antenna 840. The radio communication interface 863 may generally include, for example, an RF circuitry 864. The RF circuitry 864 may include, for example, a mixer, a filter, and an amplifier, and transfer and receive wireless signals via the antenna 840. As shown in Figure 14, the radio communication interface 863 may include multiple RF circuitry 864. For example, the multiple RF circuitry 864 may support multiple antenna elements. Although Figure 14 shows an example in which the radio communication interface 863 includes multiple RF circuitry 864, the radio communication interface 863 may also include a single RF circuitry 864.

In the eNB 830 as shown in Figure 14, the transceiver may be implemented by the radio communication interface 855. At least part of the function may also be implemented by the controller 851.

### [Application Example About User Equipment]

### (First Application Example)

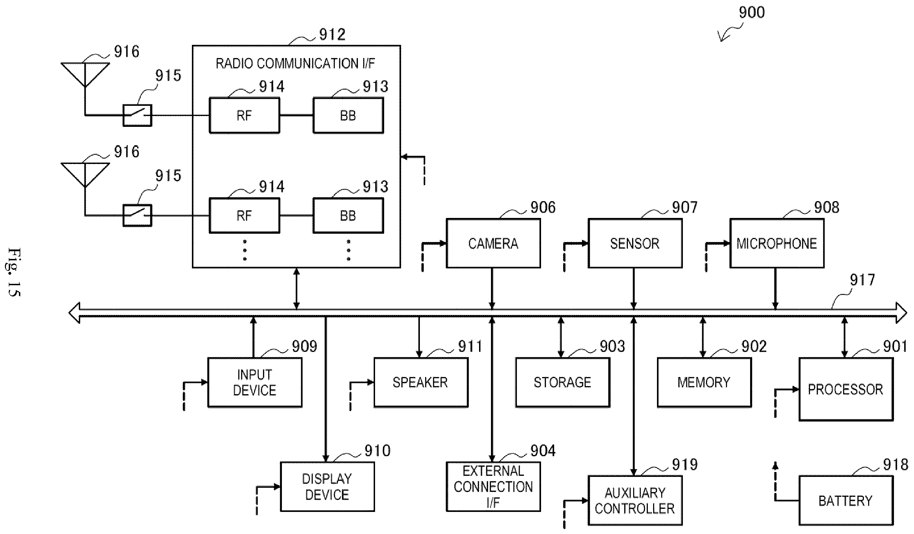

Figure 15 is a block diagram showing an example of a schematic configuration of a smart phone to which the technology of the present disclosure can be applied. The smart phone 900 includes a processor 901, a memory 902, a storage 903, an external connection interface 904, an camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls the functions of the application layer and other layers of the smart phone 900. The memory 902 includes an RAM and an ROM, and stores data and programs executed by the processor 901. The storage 903 may include a storage medium such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetic sensor, and an acceleration sensor. The microphone 908 converts sound input to the smart phone 900 into an audio signal. The input device 909 includes, for example, a touch sensor, a keypad, a keyboard, a button, or a switch configured to detect a touch on a screen of the display device 910, and receives an operation or information input from the user. The display device 910 includes a screen (such as a liquid crystal display (LCD) and an organic light emitting diode (OLED) display), and displays an output image of the smart phone 900. The speaker 911 converts the audio signal output from the smart phone 900 into sound.

The radio communication interface 912 supports any cellular communication scheme (such as LTE and LTE-Advanced), and executes wireless communications. The radio communication interface 912 may generally include, for example, a BB processor 913 and an RF circuitry 914. The BB processor 913 may execute, for example, encoding/decoding, modulation/demodulation, and multiplexing/demultiplexing, and execute various types of signal processing for wireless communications. Meanwhile, the RF circuitry 914 may include, for example, a mixer, a filter, and an amplifier, and transmit and receive wireless signals via the antenna 916. Note that, although the figure shows a circumstance where one RF link is connected with one antenna, this is only schematic, and a circumstance where one RF link is connected with multiple antennas through multiple phase shifters is also included. The radio communication interface 912 may be a chip module on which the BB processor 913 and the RF circuitry 914 are integrated. As shown in Figure 15, the radio communication interface 912 may include multiple BB processors 913 and multiple RF circuitry 914. Although Figure 15 shows an example in which the radio communication interface 912 includes multiple BB processors 913 and multiple RF circuitry 914, the radio communication interface 912 may also include a single BB processor 913 or a single RF circuitry 914.

Furthermore, in addition to the cellular communication scheme, the radio communication interface 912 may support other types of wireless communication schemes, such as a short-range wireless communication scheme, a near field communication scheme, and a wireless local area network (LAN) scheme. In this case, the radio communication interface 912 may include a BB processor 913 and an RF circuitry 914 for each wireless communication scheme.

Each of the antenna switches 915 switches a connection destination of the antenna 916 among multiple circuitry included in the radio communication interface 912 (e.g., circuitry for different wireless communication schemes).

Each of the antennas 916 includes a single or multiple antenna elements (such as multiple antenna elements included in a MIMO antenna), and is used for the radio communication interface 912 to transmit and receive wireless signals. As shown in Figure 15, the smart phone 900 may include multiple antennas 916. Although Figure 15 shows an example in which the smart phone 900 includes multiple antennas 916, the smart phone 900 may also include a single antenna 916.

Furthermore, the smart phone 900 may include an antenna 916 for each wireless communication scheme. In this case, the antenna switch 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to each block of the smart phone 900 as shown in Figure 15 via a feeder line, which is partially shown as a dashed line in the figure. The auxiliary controller 919 manipulates the least necessary function of the smart phone 900 in a sleep mode, for example.

In a case that the scheduling electronic device 100 described with reference to Figure 1 and the member electronic device 1000 described with reference to Figure 10 are implemented as the smart phone 900 shown in Figure 15, the transceivers of the scheduling electronic apparatus 100 and the member electronic device 1000 may be implemented by the radio communication interface 912. At least part of the function may also be implemented by the processor 901 or the auxiliary controller 919. For example, the processor 901 or the auxiliary controller 919 may assist the scheduling electronic apparatus in selecting a candidate time-frequency resource set required for communication by predetermined electronic apparatus(es) in a group to which the scheduling electronic apparatus belongs by performing the functions of the unit described above with reference to Figure 1 or the functions of the unit described above with reference to Figure 10.

### (Second Application Example)

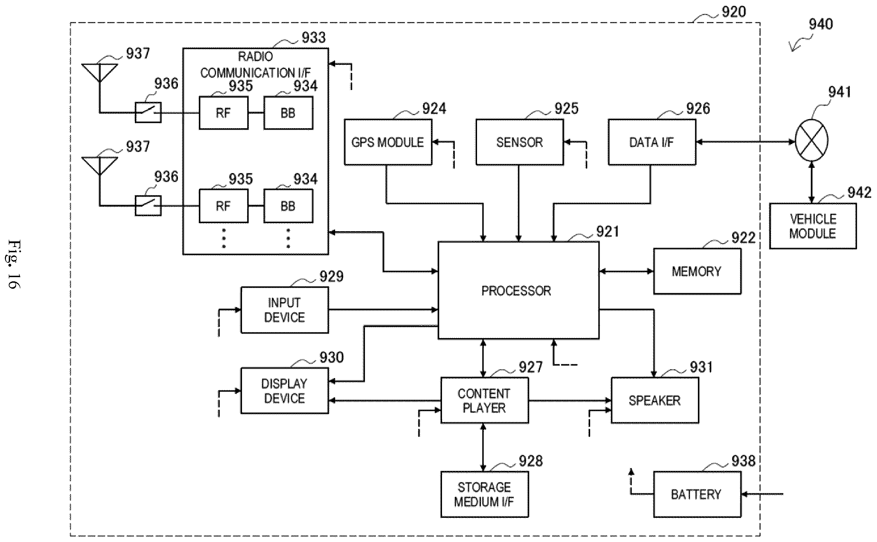

Figure 16 is a block diagram showing an example of a schematic configuration of automobile navigation equipment to which the technology of the present disclosure can be applied. The automobile navigation equipment 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls the navigation function of the automobile navigation equipment 920 and additional functions. The memory 922 includes an RAM and an ROM, and stores data and programs executed by the processor 921.

The GPS module 924 uses a GPS signal received from a GPS satellite to measure a position of the automobile navigation equipment 920 (such as latitude, longitude, and altitude). The sensor 925 may include a group of sensors, such as a gyro sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD), which is inserted into the storage medium interface 928. The input device 929 includes, for example, a touch sensor, a button, or a switch configured to detect a touch on a screen of the display device 930, and receives an operation or information input from the user. The display device 930 includes a screen such as an LCD or OLED display, and displays an image of a navigation function or reproduced content. The speaker 931 outputs the sound of the navigation function or the reproduced content.

The radio communication interface 933 supports any cellular communication scheme, such as LTE and LTE-Advanced, and executes wireless communication. The radio communication interface 933 may generally include, for example, a BB processor 934 and an RF circuitry 935. The BB processor 934 may execute, for example, encoding/decoding, modulation/demodulation, and multiplexing/demultiplexing, and execute various types of signal processing for wireless communications. Meanwhile, the RF circuitry 935 may include, for example, a mixer, a filter, and an amplifier, and transmit and receive wireless signals via the antenna 937. The radio communication interface 933 may also be a chip module on which the BB processor 934 and the RF circuitry 935 are integrated. As shown in Figure 16, the radio communication interface 933 may include multiple BB processors 934 and multiple RF circuitry 935. Although Figure 16 shows an example in which the radio communication interface 933 includes multiple BB processors 934 and multiple circuitry 935, the radio communication interface 933 may also include a single BB processor 934 or a single RF circuitry 935.

Furthermore, in addition to the cellular communication scheme, the radio communication interface 933 may support types of wireless communication schemes, such as a short-range wireless communication scheme, a near field communication scheme, and a wireless LAN scheme. In this case, the radio communication interface 933 may include a BB processor 934 and an RF circuitry 935 for each wireless communication scheme.

Each of the antenna switches 936 switches a connection destination of the antenna 937 among multiple circuitry included in the radio communication interface 933 (e.g., circuitry for different wireless communication schemes).

Each of the antennas 937 includes a single or multiple antenna elements (such as multiple antenna elements included in a MIMO antenna), and is used for the radio communication interface 933 to transmit and receive wireless signals. As shown in Figure 16, the automobile navigation equipment 920 may include multiple antennas 937. Although Figure 16 shows an example in which the automobile navigation equipment 920 includes multiple antennas 937, the automobile navigation equipment 920 may also include a single antenna 937.

Furthermore, the automobile navigation equipment 920 may include an antenna 937 for each wireless communication scheme. In this case, the antenna switch 936 may be omitted from the configuration of the automobile navigation equipment 920.

The battery 938 supplies power to each block of the automobile navigation equipment 920 as shown in Figure 16 via a feeder line, which is partially shown as a dashed line in the figure. The battery 938 accumulates electric power supplied from the vehicle.

In a case that the scheduling electronic device 100 described with reference to Figure 1 and the member electronic device 1000 described with reference to Figure 10 are implemented as the automobile navigation equipment 920 shown in Figure 16, the transceivers of the scheduling electronic apparatus 100 and the member electronic device 1000 may be implemented by the radio communication interface 933. At least part of the function may also be implemented by the processor 921. For example, the processor 921 may assist the scheduling electronic apparatus in selecting a candidate time-frequency resource set required for communication by predetermined electronic apparatus(es) in a group to which the scheduling electronic apparatus belongs by performing the functions of the unit described above with reference to Figure 1 or the functions of the unit described above with reference to Figure 10.

The technology of the present disclosure may also be implemented as an in-vehicle system (or vehicle) 940 including one or more blocks in the automobile navigation equipment 920, the in-vehicle network 941, and the vehicle module 942. The vehicle module 942 generates vehicle data (such as vehicle speed, engine speed, and failure information), and outputs the generated data to the in-vehicle network 941.

The basic principle of the present disclosure has been described above in conjunction with specific embodiments. However, it should be pointed out that, for those skilled in the art, it could be understood that all or any step or component of the methods and devices of the present disclosure may be implemented in any computing device (including processors, storage media, etc.) or network of computing devices in the form of hardware, firmware, software, or a combination thereof. This can be achieved by those skilled in the art utilizing their basic circuitry design knowledge or basic programming skills after reading the description of the present disclosure.

Moreover, the present disclosure also proposes a program product storing a machine-readable instruction code that, when read and executed by a machine, can execute the above-mentioned methods according to the embodiments of the present disclosure.

Accordingly, a storage medium for carrying the above-mentioned program product storing a machine-readable instruction code is also included in the disclosure of the present disclosure. The storage medium includes, but is not limited to, a floppy disk, an optical disk, a magneto-optical disk, a memory card, a memory stick, etc.

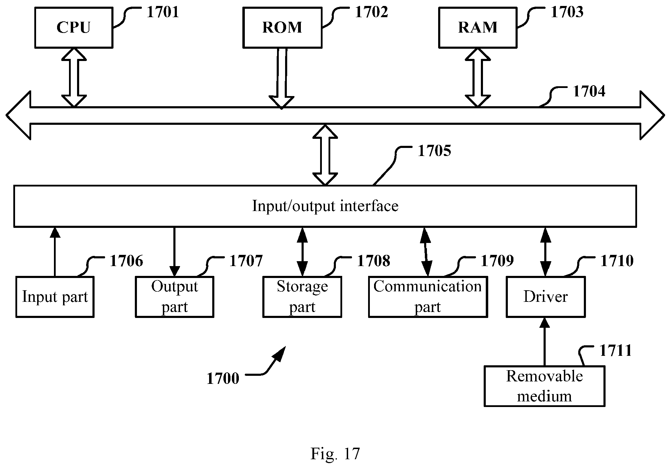

In a case where the present disclosure is implemented by software or firmware, a program constituting the software is installed from a storage medium or a network to a computer with a dedicated hardware structure (e.g., a general-purpose computer 1700 as shown in Figure 17), and the computer, when installed with various programs, can execute various functions and the like.

In Figure 17, a central processing unit (CPU) 1701 executes various processing in accordance with a program stored in a read only memory (ROM) 1702 or a program loaded from a storage part 1708 to a random access memory (RAM) 1703. In the RAM 1703, data required when the CPU 1701 executes various processing and the like is also stored as needed. The CPU 1701, the ROM 1702, and the RAM 1703 are connected to each other via a bus 1704. The input/output interface 1705 is also connected to the bus 1704.

The following components are connected to the input/output interface 1705: an input part 1706 (including a keyboard, a mouse, etc.), an output part 1707 (including a display, such as a cathode ray tube (CRT), a liquid crystal display (LCD), etc., and a speaker, etc.), a storage part 1708 (including a hard disk, etc.), and a communication part 1709 (including a network interface card such as an LAN card, a modem, etc.). The communication part 1709 executes communication processing via a network such as the Internet. The driver 1710 may also be connected to the input/output interface 1705, as needed. A removable medium 1711 such as a magnetic disk, an optical disk, a magneto-optical disk, a semiconductor memory and the like is installed on the driver 1710 as needed, so that a computer program read out therefrom is installed into the storage part 1708 as needed.

In a case where the above-mentioned series of processing is implemented by software, a program constituting the software is installed from a network such as the Internet or a storage medium such as the removable medium 1711.

Those skilled in the art should understand that, this storage medium is not limited to the removable medium 1711 as shown in Figure 17 which has a program stored therein and which is distributed separately from an apparatus to provide the program to users. Examples of the removable media 1711 include magnetic disks (including a floppy disk (registered trademark)), an optical disk (including a compact disk read-only memory (CD-ROM) and a digital versatile disk (DVD)), a magneto-optical disk (including a mini disk (MD) (registered trademark)), and a semiconductor memory. Alternatively, the storage medium may be the ROM 1702, a hard disk included in the storage part 1708, etc., which have programs stored therein and which are distributed concurrently with the apparatus including them to users.

It should also be pointed out that in the devices, methods and systems of the present disclosure, each component or each step may be decomposed and/or recombined. These decompositions and/or recombinations should be regarded as equivalent solutions of the present disclosure. Moreover, the steps of executing the above-mentioned series of processing may naturally be executed in chronological order in the order as described, but do not necessarily need to be executed in chronological order. Some steps may be executed in parallel or independently of each other.

Finally, it should be noted that, the terms "include", "comprise" or any other variants thereof are intended to cover non-exclusive inclusion, so that a process, method, article or apparatus that includes a series of elements not only includes those elements, but also includes other elements that are not explicitly listed, or but also includes elements inherent to such a process, method, article, or apparatus. Furthermore, in the absence of more restrictions, an element defined by sentence "including one..." does not exclude the existence of other identical elements in a process, method, article, or apparatus that includes the element.

Although the embodiments of the present disclosure have been described above in detail in conjunction with the accompanying drawings, it should be appreciated that, the above-described embodiments are only used to illustrate the present disclosure and do not constitute a limitation to the present disclosure. For those skilled in the art, various modifications and changes may be made to the above-mentioned embodiments without departing from the essence and scope of the present disclosure. Therefore, the scope of the present disclosure is defined only by the appended claims and equivalent meanings thereof.

### This technology may also be implemented as follows.

(1). A scheduling electronic apparatus for wireless communications, where the scheduling electronic apparatus is configured to select a candidate time-frequency resource set required for communication by predetermined electronic apparatus(es) in a group to which the scheduling electronic apparatus belongs, and the scheduling electronic apparatus includes processing circuitry configured to:
   receive, from at least one member electronic apparatus located in an overlapping zone of the group and other group, an assistance sensing result obtained by sensing time-frequency resources during at least part of an assistance resource sensing window by the at least one member electronic apparatus, to assist the scheduling electronic apparatus in selecting the candidate time-frequency resource set, where the assistance resource sensing window is a time period for the at least one member electronic apparatus to sense the time-frequency resources for the assistance.
(2). The scheduling electronic apparatus according to (1), where the processing circuitry is configured to:
   divide the at least one member electronic apparatus into different subgroups based on position information of member electronic apparatus and/or a measured value of reference signal receiving power (RSRP) of member electronic apparatus; and
   determine a subgroup assistance resource sensing window corresponding to each subgroup.
(3). The scheduling electronic apparatus according to (2), where the processing circuitry is configured to:
   divide member electronic apparatuses into a same subgroup in a case that the member electronic apparatuses have a same zone ID and a difference between measured values of RSRPs of the member electronic apparatuses is less than a first predetermined threshold.
(4). The scheduling electronic apparatus according to (2) or (3), where the processing circuitry is configured to:
   for each of the subgroups:
   based on starting points and ending points of original resource sensing windows, which are pre-configured for member electronic apparatuses in the subgroup, for sensing time-frequency resources, determine a starting point and an ending point of the subgroup assistance resource sensing window corresponding to the subgroup, and allocate starting points and ending points of sub-assistance resource sensing windows for the member electronic apparatuses in the subgroup, where
   the starting point of the original resource sensing window is a time point farthest from a gathering time point among the time points at which the member electronic apparatus is capable of sensing the time-frequency resources;
   the ending point of the original resource sensing window is a time point nearest to the gathering time point among the time points at which the member electronic apparatus is capable of sensing the time-frequency resources; and
   the gathering time point is a time point at which the member electronic apparatus is capable of gathering sensed time-frequency resources.
(5). The scheduling electronic apparatus according to (4), where the processing circuitry is configured to:
   in a case that original resource sensing windows of all member electronic apparatuses in the subgroup have a same starting point and a same ending point, set the starting point of the original resource sensing window of the member electronic apparatus in the subgroup as the starting point of the subgroup assistance resource sensing window, and set the ending point of the original resource sensing window of the member electronic apparatus in the subgroup as the ending point of the subgroup assistance resource sensing window.
(6). The scheduling electronic apparatus according to (5), where the processing circuitry is configured to:
   divide the subgroup assistance resource sensing window evenly into M sub-assistance resource sensing windows, where M represents the number of member electronic apparatuses included in the subgroup; and
   respectively allocate one of the M sub-assistance resource sensing windows for each member electronic apparatus in the subgroup.
(7). The scheduling electronic apparatus according to (4), where the processing circuitry is configured to:
   in a case that original resource sensing windows of all member electronic apparatuses in the subgroup have starting points not exactly the same or ending points not exactly the same, set an earliest starting point among the starting points of the original resource sensing windows of the member electronic apparatuses in the subgroup as the starting point of the subgroup assistance resource sensing window, and set a latest ending point among the ending points of the original resource sensing windows of the member electronic apparatuses in the subgroup as the ending point of the subgroup assistance resource sensing window.
(8). The scheduling electronic apparatus according to (7), where the processing circuitry is configured to:
   in a case that original resource sensing windows of all member electronic apparatuses in the subgroup are nested level by level, determine, for a member electronic apparatus having an original resource sensing window which is at a lowest level and has a smallest length in the subgroup, an original resource sensing window of the member electronic apparatus as a sub-assistance resource sensing window of the member electronic apparatus; and determine, for other member electronic apparatus in the subgroup, a time period from a starting point of an original resource sensing window of the other member electronic apparatus to a starting point of a next level of original resource sensing window for the original resource sensing window of the other member electronic apparatus and a time period from an ending point of the next level of original resource sensing window to an ending point of the original resource sensing window of the other member electronic apparatus, as an sub-assistance resource sensing window of the other member electronic apparatus.
(9). The scheduling electronic apparatus according to any one of (4) to (8), where the processing circuitry is configured to notify the member electronic apparatuses in the subgroup of information about sub-assistance resource sensing window of the member electronic apparatus.
(10). The scheduling electronic apparatus according to (9), where the processing circuitry is configured to perform the notification through a time-domain-resource information field in sidelink control information (SCI).
(11). The scheduling electronic apparatus according to (9), where the processing circuitry is configured to perform the notification through a physical sidelink control channel (PSSCH) and indicate a position of the information about the sub-assistance resource sensing window of the member electronic apparatus in the (PSSCH) through an indicator in sidelink control information (SCI).
(12). The scheduling electronic apparatus according to (9), where the processing circuitry is configured to perform the notification through PC5 radio resource control (RRC) signaling.
(13). The scheduling electronic apparatus according to any one of (1) to (12), where the processing circuitry is configured to determine, based on auxiliary information reported from the member electronic apparatus located in the overlapping zone in an event-triggering manner or in a periodical manner, at least one member electronic apparatus for assisting the scheduling electronic apparatus in selecting the candidate time-frequency resource set.
(14). The scheduling electronic apparatus according to (13), where
   the auxiliary information includes a starting point and an ending point, of an original resource sensing window for sensing time-frequency resources, pre-configured for the member electronic apparatus, information indicating whether the member electronic apparatus is power-limited, transmission preparation time of a physical sidelink control channel (PSCCH) and a physical sidelink shared channel (PSSCH) of the member electronic apparatus, and a measured value of reference signal receiving power (RSRP) of the member electronic apparatus, where
   the starting point of the original resource sensing window is a time point farthest from a gathering time point among the time points at which the member electronic apparatus is capable of sensing the time-frequency resources;
   the ending point of the original resource sensing window is a time point nearest to the gathering time point among the time points at which the member electronic apparatus is capable of sensing the time-frequency resources; and
   the gathering time point is a time point at which the member electronic apparatus is capable of gathering sensed time-frequency resources.
(15). The scheduling electronic apparatus according to (14), where the auxiliary information further includes a measurement result of a demodulation reference signal (DMRS) of the member electronic apparatus and/or a value of a subcarrier spacing (SCS) of the member electronic apparatus.
(16). The scheduling electronic apparatus according to any one of (13) to (15), where the processing circuitry is configured to send an indicator to the member electronic apparatus located in the overlapping zone through a physical sidelink control channel (PSCCH) to indicate whether to assist the scheduling electronic apparatus in selecting the candidate time-frequency resource set.
(17). The scheduling electronic apparatus according to any one of (1) to (16), where the processing circuitry is configured to reflect information about the group through a group ID field in sidelink control information (SCI).
(18). The scheduling electronic apparatus according to any one of (1) to (17), where the processing circuitry is configured to
   in case that a performance change of electronic apparatuses in the group to which the scheduling electronic apparatus belongs is greater than a second predetermined threshold and/or in a case that the electronic apparatuses constituting the group to which the scheduling electronic apparatus belongs change, redetermine the at least one member electronic apparatus for assisting the scheduling electronic apparatus in selecting the candidate time-frequency resource set and/or re-divide the at least one member electronic apparatuses into different subgroups.
(19). The scheduling electronic apparatus according to any one of (1) to (18), where the processing circuitry is configured to select the candidate time-frequency resource set in a scenario of a sidelink resource-selection mode 2(d) in a case that the scheduling electronic apparatus is not within coverage of a network-side electronic apparatus providing a service for the scheduling electronic apparatus.
(20). A member electronic apparatus for wireless communications, where the member electronic apparatus is located in an overlapping zone of a group to which the member electronic apparatus belongs and other group, and the member electronic apparatus includes processing circuitry configured to:
   report an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group, where the assistance resource sensing window is a time period for at least one member electronic apparatus including the member electronic apparatus located in the overlapping zone to sense the time-frequency resources for the assistance.
(21). The member electronic apparatus for wireless communications according to (20), where the processing circuitry is configured to send auxiliary information for assisting the scheduling electronic apparatus in selecting the candidate time-frequency resource set to the scheduling electronic apparatus in an event-triggering manner or a periodical manner.
(22). The member electronic apparatus for wireless communications according to (21), where the processing circuitry is configured to be triggered to send the auxiliary information upon receiving sidelink control information (SCI) from a scheduling electronic apparatus in the other group.
(23). The member electronic apparatus for wireless communications according to (22), where the processing circuitry is configured to be triggered to send the auxiliary information in a case of determining that an ID of the group to which the member electronic apparatus belongs is different from a group ID included in the SCI.
(24). The member electronic apparatus for wireless communications according to (21), where the processing circuitry is configured to determine a period for sending the auxiliary information based on factory settings of the member electronic apparatus.
(25). The member electronic apparatus for wireless communications according to (21), where the processing circuitry is configured to determine a period for sending the auxiliary information based on transmission power and/or computing capacity of the member electronic apparatus.
(26). The member electronic apparatus for wireless communications according to any one of (21) to (25), where
   the auxiliary information includes a starting point and an ending point, of an original resource sensing window for sensing time-frequency resources, pre-configured for the member electronic apparatus, information indicating whether the member electronic apparatus is power-limited, transmission preparation time of a physical sidelink control channel (PSCCH) and a physical sidelink shared channel (PSSCH) of the member electronic apparatus, and a measured value of reference signal receiving power (RSRP) of the member electronic apparatus, where
   the starting point of the original resource sensing window is a time point farthest from a gathering time point among the time points at which the member electronic apparatus is capable of sensing the time-frequency resources;
   the ending point of the original resource sensing window is a time point nearest to the gathering time point among the time points at which the member electronic apparatus is capable of sensing the time-frequency resources; and
   the gathering time point is a time point at which the member electronic apparatus is capable of gathering sensed time-frequency resources.
(27). The member electronic apparatus for wireless communications according to (26), where the auxiliary information further includes a measurement result of a demodulation reference signal (DMRS) of the member electronic apparatus and/or a value of a subcarrier spacing (SCS) of the member electronic apparatus.
(28). The member electronic apparatus for wireless communications according to any one of (20) to (27), where the processing circuitry is configured to report the assistance sensing result through media access control control elements (MAC CE) or sidelink control information (SCI).
(29). The member electronic apparatus for wireless communications according to any one of (20) to (28), where the assistance sensing result includes a zone ID of the member electronic apparatus, and information about time-frequency resources sensed by the member electronic apparatus during at least part of the assistance resource sensing window.
(30). The member electronic apparatus for wireless communications according to (29), where the assistance sensing result further includes an ID of a group to which the member electronic apparatus belongs.
(31). A method for wireless communications, where the method is performed by a scheduling electronic apparatus for selecting a candidate time-frequency resource set required for communication by predetermined electronic apparatus(es) in a group to which the scheduling electronic apparatus belongs, and the method includes:
   receiving, from at least one member electronic apparatus located in an overlapping zone of the group and other group, an assistance sensing result obtained by sensing time-frequency resources during at least part of an assistance resource sensing window by the at least one member electronic apparatus, to assist the scheduling electronic apparatus in selecting the candidate time-frequency resource set, where the assistance resource sensing window is a time period for the at least one member electronic apparatus to sense the time-frequency resources for the assistance.
(32). A method for wireless communications, where the method is performed by a member electronic apparatus located in an overlapping zone of a group to which the member electronic apparatus belongs and other group, and the method includes:
   reporting an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group, where the assistance resource sensing window is a time period for at least one member electronic apparatus including the member electronic apparatus located in the overlapping zone to sense the time-frequency resources for the assistance.
(33). A computer-readable storage medium storing computer executable instructions, when being executed, for implementing the method for wireless communications according to (31) or (32).

## Claims

1. A scheduling electronic apparatus for wireless communications, wherein the scheduling electronic apparatus is configured to select a candidate time-frequency resource set required for communication by predetermined electronic apparatus(es) in a group to which the scheduling electronic apparatus belongs, and the scheduling electronic apparatus comprises processing circuitry configured to:
receive, from at least one member electronic apparatus located in an overlapping zone of the group and other group, an assistance sensing result obtained by sensing time-frequency resources during at least part of an assistance resource sensing window by the at least one member electronic apparatus, to assist the scheduling electronic apparatus in selecting the candidate time-frequency resource set, wherein the assistance resource sensing window is a time period for the at least one member electronic apparatus to sense the time-frequency resources for the assistance.

2. The scheduling electronic apparatus according to claim 1, wherein the processing circuitry is configured to:
divide the at least one member electronic apparatus into different subgroups based on position information of member electronic apparatus and/or a measured value of reference signal receiving power (RSRP) of member electronic apparatus; and
determine a subgroup assistance resource sensing window corresponding to each subgroup.

3. The scheduling electronic apparatus according to claim 2, wherein the processing circuitry is configured to:
divide member electronic apparatuses into a same subgroup in a case that the member electronic apparatuses have a same zone ID and a difference between measured values of RSRPs of the member electronic apparatuses is less than a first predetermined threshold.

4. The scheduling electronic apparatus according to claim 2 or 3, wherein the processing circuitry is configured to:
for each of the subgroups:
based on starting points and ending points of original resource sensing windows, which are pre-configured for member electronic apparatuses in the subgroup, for sensing time-frequency resources, determine a starting point and an ending point of the subgroup assistance resource sensing window corresponding to the subgroup, and allocate starting points and ending points of sub-assistance resource sensing windows for the member electronic apparatuses in the subgroup, wherein
the starting point of the original resource sensing window is a time point farthest from a gathering time point among the time points at which the member electronic apparatus is capable of sensing the time-frequency resources;
the ending point of the original resource sensing window is a time point nearest to the gathering time point among the time points at which the member electronic apparatus is capable of sensing the time-frequency resources; and
the gathering time point is a time point at which the member electronic apparatus is capable of gathering sensed time-frequency resources.

5. The scheduling electronic apparatus according to claim 4, wherein the processing circuitry is configured to:
in a case that original resource sensing windows of all member electronic apparatuses in the subgroup have a same starting point and a same ending point, set the starting point of the original resource sensing window of the member electronic apparatus in the subgroup as the starting point of the subgroup assistance resource sensing window, and set the ending point of the original resource sensing window of the member electronic apparatus in the subgroup as the ending point of the subgroup assistance resource sensing window.

6. The scheduling electronic apparatus according to claim 5, wherein the processing circuitry is configured to:
divide the subgroup assistance resource sensing window evenly into M sub-assistance resource sensing windows, wherein M represents the number of member electronic apparatuses comprised in the subgroup; and
respectively allocate one of the M sub-assistance resource sensing windows for each member electronic apparatus in the subgroup.

7. The scheduling electronic apparatus according to claim 4, wherein the processing circuitry is configured to:
in a case that original resource sensing windows of all member electronic apparatuses in the subgroup have starting points not exactly the same or ending points not exactly the same, set an earliest starting point among the starting points of the original resource sensing windows of the member electronic apparatuses in the subgroup as the starting point of the subgroup assistance resource sensing window, and set a latest ending point among the ending points of the original resource sensing windows of the member electronic apparatuses in the subgroup as the ending point of the subgroup assistance resource sensing window.

8. The scheduling electronic apparatus according to claim 7, wherein the processing circuitry is configured to:
in a case that original resource sensing windows of all member electronic apparatuses in the subgroup are nested level by level, determine, for a member electronic apparatus having an original resource sensing window which is at a lowest level and has a smallest length in the subgroup, an original resource sensing window of the member electronic apparatus as a sub-assistance resource sensing window of the member electronic apparatus; and determine, for other member electronic apparatus in the subgroup, a time period from a starting point of an original resource sensing window of the other member electronic apparatus to a starting point of a next level of original resource sensing window for the original resource sensing window of the other member electronic apparatus and a time period from an ending point of the next level of original resource sensing window to an ending point of the original resource sensing window of the other member electronic apparatus, as an sub-assistance resource sensing window of the other member electronic apparatus.

9. The scheduling electronic apparatus according to any one of claims 4 to 8, wherein the processing circuitry is configured to notify the member electronic apparatuses in the subgroup of information about sub-assistance resource sensing window of the member electronic apparatus.

10. The scheduling electronic apparatus according to claim 9, wherein the processing circuitry is configured to perform the notification through a time-domain-resource information field in sidelink control information (SCI).

11. The scheduling electronic apparatus according to claim 9, wherein the processing circuitry is configured to perform the notification through a physical sidelink control channel (PSSCH) and indicate a position of the information about the sub-assistance resource sensing window of the member electronic apparatus in the PSSCH through an indicator in sidelink control information (SCI).

12. The scheduling electronic apparatus according to claim 9, wherein the processing circuitry is configured to perform the notification through PC5 radio resource control (RRC) signaling.

13. The scheduling electronic apparatus according to any one of claims 1 to 12, wherein the processing circuitry is configured to determine, based on auxiliary information reported from the member electronic apparatus located in the overlapping zone in an event-triggering manner or in a periodical manner, at least one member electronic apparatus for assisting the scheduling electronic apparatus in selecting the candidate time-frequency resource set.

14. The scheduling electronic apparatus according to claim 13, wherein
the auxiliary information comprises a starting point and an ending point, of an original resource sensing window for sensing time-frequency resources, pre-configured for the member electronic apparatus, information indicating whether the member electronic apparatus is power-limited, transmission preparation time of a physical sidelink control channel (PSCCH) and a physical sidelink shared channel (PSSCH) of the member electronic apparatus, and a measured value of reference signal receiving power (RSRP) of the member electronic apparatus, wherein
the starting point of the original resource sensing window is a time point farthest from a gathering time point among the time points at which the member electronic apparatus is capable of sensing the time-frequency resources;
the ending point of the original resource sensing window is a time point nearest to the gathering time point among the time points at which the member electronic apparatus is capable of sensing the time-frequency resources; and
the gathering time point is a time point at which the member electronic apparatus is capable of gathering sensed time-frequency resources.

15. The scheduling electronic apparatus according to claim 14, wherein the auxiliary information further comprises a measurement result of a demodulation reference signal (DMRS) of the member electronic apparatus and/or a value of a subcarrier spacing (SCS) of the member electronic apparatus.

16. The scheduling electronic apparatus according to any one of claims 13 to 15, wherein the processing circuitry is configured to send an indicator to the member electronic apparatus located in the overlapping zone through a physical sidelink control channel (PSCCH) to indicate whether to assist the scheduling electronic apparatus in selecting the candidate time-frequency resource set.

17. The scheduling electronic apparatus according to any one of claims 1 to 16, wherein the processing circuitry is configured to reflect information about the group through a group ID field in sidelink control information (SCI).

18. The scheduling electronic apparatus according to any one of claims 1 to 17, wherein the processing circuitry is configured to
in case that a performance change of electronic apparatuses in the group to which the scheduling electronic apparatus belongs is greater than a second predetermined threshold and/or in a case that the electronic apparatuses constituting the group to which the scheduling electronic apparatus belongs change, redetermine the at least one member electronic apparatus for assisting the scheduling electronic apparatus in selecting the candidate time-frequency resource set and/or re-divide the at least one member electronic apparatuses into different subgroups.

19. The scheduling electronic apparatus according to any one of claims 1 to 18, wherein the processing circuitry is configured to select the candidate time-frequency resource set in a scenario of a sidelink resource-selection mode 2(d) in a case that the scheduling electronic apparatus is not within coverage of a network-side electronic apparatus providing a service for the scheduling electronic apparatus.

20. A member electronic apparatus for wireless communications, wherein the member electronic apparatus is located in an overlapping zone of a group to which the member electronic apparatus belongs and other group, and the member electronic apparatus comprises processing circuitry configured to:
report an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group, wherein the assistance resource sensing window is a time period for at least one member electronic apparatus comprising the member electronic apparatus located in the overlapping zone to sense the time-frequency resources for the assistance.

21. The member electronic apparatus for wireless communications according to claim 20, wherein the processing circuitry is configured to send auxiliary information for assisting the scheduling electronic apparatus in selecting the candidate time-frequency resource set to the scheduling electronic apparatus in an event-triggering manner or a periodical manner.

22. The member electronic apparatus for wireless communications according to claim 21, wherein the processing circuitry is configured to be triggered to send the auxiliary information upon receiving sidelink control information (SCI) from a scheduling electronic apparatus in the other group.

23. The member electronic apparatus for wireless communications according to claim 22, wherein the processing circuitry is configured to be triggered to send the auxiliary information in a case of determining that an ID of the group to which the member electronic apparatus belongs is different from a group ID comprised in the SCI.

24. The member electronic apparatus for wireless communications according to claim 21, wherein the processing circuitry is configured to determine a period for sending the auxiliary information based on factory settings of the member electronic apparatus.

25. The member electronic apparatus for wireless communications according to claim 21, wherein the processing circuitry is configured to determine a period for sending the auxiliary information based on transmission power and/or computing capacity of the member electronic apparatus.

26. The member electronic apparatus for wireless communications according to any one of claims 21 to 25, wherein
the auxiliary information comprises a starting point and an ending point, of an original resource sensing window for sensing time-frequency resources, pre-configured for the member electronic apparatus, information indicating whether the member electronic apparatus is power-limited, transmission preparation time of a physical sidelink control channel (PSCCH) and a physical sidelink shared channel (PSSCH) of the member electronic apparatus, and a measured value of reference signal receiving power (RSRP) of the member electronic apparatus, wherein
the starting point of the original resource sensing window is a time point farthest from a gathering time point among the time points at which the member electronic apparatus is capable of sensing the time-frequency resources;
the ending point of the original resource sensing window is a time point nearest to the gathering time point among the time points at which the member electronic apparatus is capable of sensing the time-frequency resources; and
the gathering time point is a time point at which the member electronic apparatus is capable of gathering sensed time-frequency resources.

27. The member electronic apparatus for wireless communications according to claim 26, wherein the auxiliary information further comprises a measurement result of a demodulation reference signal (DMRS) of the member electronic apparatus and/or a value of a subcarrier spacing (SCS) of the member electronic apparatus.

28. The member electronic apparatus for wireless communications according to any one of claims 20 to 27, wherein the processing circuitry is configured to report the assistance sensing result through media access control control elements (MAC CE) or sidelink control information (SCI).

29. The member electronic apparatus for wireless communications according to any one of claims 20 to 28, wherein the assistance sensing result comprises a zone ID of the member electronic apparatus, and information about time-frequency resources sensed by the member electronic apparatus during at least part of the assistance resource sensing window.

30. The member electronic apparatus for wireless communications according to claim 29, wherein the assistance sensing result further comprises an ID of a group to which the member electronic apparatus belongs.

31. A method for wireless communications, wherein the method is performed by a scheduling electronic apparatus for selecting a candidate time-frequency resource set required for communication by predetermined electronic apparatus(es) in a group to which the scheduling electronic apparatus belongs, and the method comprises:
receiving, from at least one member electronic apparatus located in an overlapping zone of the group and other group, an assistance sensing result obtained by sensing time-frequency resources during at least part of an assistance resource sensing window by the at least one member electronic apparatus, to assist the scheduling electronic apparatus in selecting the candidate time-frequency resource set, wherein the assistance resource sensing window is a time period for the at least one member electronic apparatus to sense the time-frequency resources for the assistance.

32. A method for wireless communications, wherein the method is performed by a member electronic apparatus located in an overlapping zone of a group to which the member electronic apparatus belongs and other group, and the method comprises:
reporting an assistance sensing result obtained by sensing time-frequency resources during at least part of an assistance resource sensing window to a scheduling electronic apparatus in the group, to assist the scheduling electronic apparatus in selecting a candidate time-frequency resource set required for communication by predetermined electronic apparatus(es) in the group, wherein the assistance resource sensing window is a time period for at least one member electronic apparatus comprising the member electronic apparatus located in the overlapping zone to sense the time-frequency resources for the assistance.

33. A computer-readable storage medium storing computer executable instructions, when being executed, for implementing the method for wireless communications according to claim 31 or 32.
